# EUROPÄISCHE PATENTSCHRIFT

(11) **EP 3 254 357 B1**
(45) Veröffentlichungstag und Bekanntmachung des Hinweises auf die Patenterteilung: **25.12.2024**
(21) Anmeldenummer: 16705443.6
(22) Anmeldetag: 03.02.2016
(51) Int. Cl.: H02K 3/04, H01R 4/24

(54) **ELEKTROMOTOR UND SCHALTEINHEIT HIERFÜR**
ELECTRIC MOTOR AND SWITCHING UNIT THEREFOR
MOTEUR ÉLECTRIQUE ET ENSEMBLE DE CONNEXION POUR CELUI-CI

(30) Priorität: 03.02.2015 DE 102015001214
(43) Veröffentlichungstag der Anmeldung: 13.12.2017
(60) Teilanmeldung: 18168825.0
(73) Patentinhaber: Brose Fahrzeugteile SE & Co. Kommanditgesellschaft, Würzburg, 97076 Würzburg (DE)
(72) Erfinder: BEETZ, Stefan, 19089 Barnin (DE); BERKOUK, Maurad, 29217 Le Conquet (FR); CORDRIE, Sylvain, 97230 Estenfeld (DE); JÄGER, Dominik, 98587 Bermbach (DE); LABAT, Sebastien, 97523 Schwanfeld (DE); SIMPSON, Stanley, Oxford, Michigan 48371 (US)
(74) Vertreter: FDST Patentanwälte
(86) Internationale Anmeldenummer: PCT/EP2016/052267
(87) Internationale Veröffentlichungsnummer: WO 2016/124636

(56) Entgegenhaltungen:
- EP-A1- 2 712 029
- DE-A1- 10 152 006
- DE-A1- 102008 033 905
- US-A- 6 123 566

## Beschreibung

Die Erfindung betrifft einen Elektromotor, insbesondere einen Kühlerlüftermotor eines Kraftfahrzeugs, mit einer Schalteinheit für die Spulenenden einer Motor- oder Statorwicklung des Elektromotors, gemäß dem Oberbegriff des Anspruchs 1. Sie betrifft weiter eine derartige Schalteinheit. Ein derartiger Elektromotor und eine solche Schalteinheit sind beispielsweise aus der DE 101 52 006 A1 bekannt.

Ein bürstenloser Elektromotor weist einen Stator mit einer Anzahl von beispielsweise sternförmig angeordneten Statorzähnen auf, welche eine elektrische Statorwicklung (Motorwicklung) in Form einzelner Statorspulen tragen, die ihrerseits aus einem Isolierdraht gewickelt sind. Die Spulen sind mit deren Spulenenden einzelnen Strängen zugeordnet und untereinander in einer vorbestimmten Weise über Verbindungsleiter einer Schalteinheit verschaltet.

Im Falle eines bürstenlosen Elektromotors als dreiphasige Drehstrommaschine weist der Stator drei Stränge und damit zumindest drei Verbindungsleiter auf, die jeweils phasenversetzt mit elektrischem Strom beaufschlagt werden, um ein magnetisches Drehfeld zu erzeugen, in dem ein üblicherweise mit Permanentmagneten versehener Rotor oder Läufer rotiert. Die Verbindungsleiter werden zur Ansteuerung des Elektromotors an eine Motorelektronik geführt. Die Spulen der Statorwicklung werden mittels der Verbindungsleiter in bestimmter Weise miteinander verschaltet. Die Art der Verschaltung ist durch das Wickelschema der Statorwicklung bestimmt, wobei als Wickelschema eine Sternschaltung oder eine Dreiecksschaltung der Spulen üblich ist.

Statorwicklung mit einer Anzahl von Wicklungen pro Phase, welche entweder parallel oder in Reihe verschaltet sind. Die Steckverbinderanordnung umfasst ein ringförmiges Drahtleitelement zur Aufnahme der Enden der Wicklungen sowie eine Verbindungsaufnahme in Form von drei ringförmigen Verbindungsschienen, die jeweils als Endung einen Kabelschuh aufweisen. Außerdem weisen die Verbindungsschienen axial erweiterte Drahtklemmen zur Sicherstellung des elektrischen Kontaktes für die drei Phasen durch die Schlitze des Drahtleitelementes auf.

Aus der US 2005/ 0088049 A1 ist ein Stator für einen elektrischen Motor mit ringförmigem Statorpaket mit mehreren Statorzähnen bekannt. Eine ringförmige Verbindungseinheit ist an einer End- oder Stirnseite des Stators angebracht. Die ringförmige Verbindungseinheit umfasst Ablenkungselemente sowie ein Tragelement, welches mit einer Aufnahme und Schlitzen ausgestattet ist. In der Aufnahme befindet sich eine Reihe von gegeneinander isolierten Verbindungsringen, deren jeder Kontaktelemente aufweist, welche durch die Schlitze nach außen geführt sind.

Aus der DE 10 2009 036 128 A1 ist ein Elektromotor mit einem Stator mit zwölf Statorwicklungen bekannt, die teilweise in Reihe und letztendlich zu einer Sternschaltung verschaltet sind. Zur Verschaltung sind ein Tragelement und eine Leiterbahnstruktur aus vier Drähten vorgesehen, die von dem Tragelement aufgenommen sind, indem die Drähte in dieses Tragelement eingeklipst sind. Die Drähte bilden einen vollständigen Ring oder teilweise Ringabschnitte, wobei ein solcher Draht als vollständiger Ring im Zusammenhang mit den Spulenenden der Statorwicklungen die Sternschaltung ausbildet. Das Tragelement weist axiale Führungen für die Spulenenden auf, wobei die elektrische Verbindung zwischen den Spulenenden und den jeweiligen Drähten durch Löten, Schweißen oder Heißverstemmen erfolgt.

Schaltungseinheiten mit aus Runddraht bestehenden Kotaktdrähten zur Verbindung und Kontaktierung der Spulenenden sind aus der US 7,948,130 B2 und aus der DE 102 61 611 A1 bekannt. Bei aus Runddraht bestehenden Kotaktdrähten ist die Kontaktierung mit den Spulenenden mittels üblicherweise Widerstandsschwei-ßen problematisch, da aufgrund der runden Drahtquerschnitte sowohl der Spulenenden als auch des jeweiligen Kontaktdrahtes diese die beteiligten Drähte beim Verschweißen mittels glatten oder planflächigen Elektroden zum Verkippen neigen. Eine solche Verkippung der Drähte führt aufgrund häufiger Fehlschweißungen zu einem unerwünscht hohen Ausschuss.

Der Erfindung liegt daher die Aufgabe zugrunde, einen Elektromotor mit einer zur einfachen sowie zuverlässigen Verbindung und Kontaktierung der Wicklungsspulen besonders geeigneten Schalteinheit anzugeben. Des Weiteren soll eine Schalteinheit mit einer Anzahl von, vorzugsweise zu einem Verschaltungsring ringförmig angeordneten, Kontaktdrähten zum Verschalten der Spulen angegeben werden, deren Drahtenden in besonders geeigneter Art und Weise elektrisch leitend miteinander und/oder mit Phasenanschlüssen der Motorwicklung verbindbar oder verbunden sind.

Bezüglich des Elektromotors wird diese Aufgabe mit den Merkmalen des Anspruchs 1 und hinsichtlich der Schalteinheit mit den Merkmalen des Anspruchs 9 erfindungsgemäß gelöst. Vorteilhafte Ausgestaltungen und Weiterbildungen sind Gegenstand der Unteransprüche.

Hierzu weist der Elektromotor eine Schalteinheit mit einer Anzahl von Kontaktdrähten und mit einem ringförmigen Rahmenteil mit einer Anzahl von geschlitzten Stecktasche auf. Dabei sind die Kontaktdrähte zu einem Verschaltungsring für die Spulenenden einer Statorwicklung angeordnet. Die Drahtenden der vorzugsweis mit einer isolierenden Ummantelung (Isolierung) versehenen Kontaktdrähte (Kupferdrähte) sind mit Schneid-Klemm-Kontakten verbunden, d. h. miteinander elektrisch leitend kontaktiert. Der oder jeder Schneid-Klemm-Kontakt weist zwei unter Bildung eines Schneid-Klemm-Schlitzes mit freiendseitiger Schlitzöffnung zueinander beabstandete Schneid-Klemm-Schenkel zum Verbinden von jeweils mindestens zwei der Drahtenden auf, wobei die Schneid-Klemm-Kontakte im Montagezustand in Stecktaschen des Rahmenteil der Schalteinheit einsitzen. Geeigneterweise weist hierzu die jeweilige Stecktasche des Rahmenteils einen mit dem destens zwei der Drahtenden auf, wobei die Schneid-Klemm-Kontakte im Montagezustand in Stecktaschen des Rahmenteil der Schalteinheit einsitzen. Geeigneterweise weist hierzu die jeweilige Stecktasche des Rahmenteils einen mit dem Schneid-Klemm-Schlitz des in diese Stecktasche gesteckten Schneid-Klemm-Kontaktes fluchtenden Schlitz auf. Diese Schlitze des Schneid-Klemm-Kontaktes und der rahmenteilseitigen Stecktaschen verlaufen zweckmäßigerweise axial, d. h. bezogen auf den Montagezustand des Elektromotors in Axialrichtung. Ein Schneid-Klemm-Kontakt ist üblicherweise ein Verbindungselement, um ein Stecker-Element mit einem Draht, beispielswiese auch einen mit einer Isolierung versehenen Draht, zu verbinden. Ein derartiger Schneid-Klemm-Kontakt ist üblicherweise für die Schneid-Klemm-Kontaktierung eines einzelnen Drahtes vorgesehen und ausgebildet.

Demgegenüber ist der erfindungsgemäße Schneid-Klemm-Kontakt zur Verbindung von zwei oder mehreren Drähten (Kupferdrähten) zu einer dauerhaften Verbindung ausgebildet. Der Schneid-Klemm-Schlitz und/oder die Schneid-Klemm-Schenkel des Schneid-Klemm-Kontaktes sind daher derart ausgebildet, dass die mindestens zwei in Schlitzlängsrichtung hintereinander in den Schneid-Klemm-Schlitz eingeführten und dort an mindestens einer schenkelseitigen Messerkante entlanggeführten Drahtenden sicher klemmkontaktiert sind.

Erfahrungsgemäß ist es vorgesehen, dass der Schneid-Klemm-Schlitz des oder jedes Schneid-Klemm-Kontaktes in Schlitzlängsrichtung einen sich an eine schenkelfreiendseitige Schlitzöffnung anschließenden ersten Schlitzbereich und einen sich daran anschließenden, rauten- oder rhombusförmig, aufgeweiteten zweiten Schlitzbereich aufweist. Geeigneterweise weist der oder jeder Schenkel des jeweiligen Schneid-Klemm-Kontaktes schenkelaußenseitig mindestens eine erhabene Fügekontur auf.

Eine geeignete Ausgestaltung sieht zusätzlich oder alternativ vor, dass der Schneid-Klemm-Schlitz des oder jedes Schneid-Klemm-Kontaktes in einem in Schlitzlängsrichtung einer schenkelfreiendseitigen Schlitzöffnung abgewandten Schlitzendbereich eine, vorzugsweise kreisförmige, Ausnehmungskontur aufweist, die eine Sollbiegestelle (Soll-Biegestelle) für die Schneid-Klemm-Schenkel bildet.

Gemäß einer zweckmäßigen Weiterbildung dieser Sollbiegestelle der Schneid-Klemm-Schenkel bildet die Ausnehmungskontur eine den Schneid-Klemm-Schlitz verengende Anlagekontur aus, an welcher das in den Schneid-Klemm-Schlitz erste eingeführte Drahtende anschlägt. Dieses Drahtende bildet dann praktisch den Anschlag für das zweite in den Schneid-Klemm-Schlitz eingeführte Drahtende.

Hinsichtlich der Schalteinheit für einen solchen, vorzugsweise bürstenlosen Elektromotor, mit einer Anzahl von Kontaktdrähten zur Verschaltung von Spulen einer Stator- oder Motorwicklung bilden die Schneid-Klemm-Kontaktes geeigneterweise eine entsprechende Anzahl von Phasenanschlüssen, beispielsweise drei Phasenanschlüsse bei einem dreiphasigen Elektromotor bzw. einer dreiphasigen Motorwicklung. Dabei können die mittels der Schneid-Klemm-Kontakte hergestellten Verbindungen der Drahtenden der vorzugsweise zu einem Verschaltungsring angeordneten Kontaktdrähte auch für die Phasenanschlüsse einer mehrphasigen Motor- oder Statorwicklung eingesetzt oder verwendet werden.

Der Schneid-Klemm-Kontakt weist zwei Schenkel (Schneid-Klemm-Schenkel) auf. Zwischen den Schenkeln ist ein Schlitz (Schneid-Klemm-Schlitz) gebildet, der an den Schenkelfreienden offen und an den gegenüberliegenden Schenkelenden geschlossen ist. Die einander gegenüberliegenden Schenkelkanten sind derart ausgebildet, dass ein von der Schlitzöffnung her in den Schlitz eingeführter Draht (Leiter) an den nachfolgend als Messerkanten bezeichneten Schenkelkanten (umfangsseitig) an- und/oder eingeschnitten und dabei die Drahtisolierung durchtrennt wird. Die biegeelastischen Schenkel üben dabei eine federartige Klemmkraft auf den jeweiligen Draht (das jeweilige Drahtende) aus. Im Schneid-Klemm-Zustand des Drahtes bzw. Drahtendes verlaufen die Messerkanten der Schneid-Klemm-Schenkel quasi tangential zum üblicherweise etwa kreisförmigen Drahtdurchmesser.

Die Schneiden- beziehungsweise Messerkanten- und/oder die Schlitzgeometrie des Schneid-Klemm-Kontaktes ist dabei derart, dass in Schlitzlängsrichtung sowohl ein erster als auch mindestens ein zweiter Draht (Drahtende) im Schneid-Klemm- Schlitz desselben Schneid-Klemm-Kontaktes zuverlässig klemmkontaktiert wird.

Insbesondere ist dabei ein bestimmtes, vorgegebenes und/oder gewähltes Verhältnis der Schnitttiefe des Drahtes (Drahtendes) zum Drahtdurchmesser mittels der Messerkantenanordnung und/oder -kontur hergestellt. Die Geometrie beziehungsweise Messerkantenkontur und/oder Schlitzgeometrie ist dabei derart, dass zunächst ein erster Draht (Drahtende) beim Kontaktieren in den Schneid-Klemm-Kontakt hineingedrückt und an der Messerkante beziehungsweise den beiden den Schlitz flankierenden Messerkanten angeschnitten wird. Der Draht ist dabei normal zur Schlitzebene des Schneid-Klemm-Kontaktes orientiert. Im Bereich der Schneid-Klemm-Kanten verringert sich der Drahtdurchmesser um beispielsweise 20% bis 25% während der nachfolgend beim Kontaktieren angeschnittene Draht hinsichtlich dessen Drahtdurchmessers im Bereich der Schneidkanten um einen geringeren Betrag von beispielsweise 10% bis < 20% angeschnitten wird. Der oder jeder Draht ist dabei normal zur Schlitzebene des Schneid-Klemm-Kontaktes orientiert.

In einer besonders vorteilhaften Ausgestaltung ist die Schlitzgeometrie derart, dass ausgehend von der Schlitzöffnung sich an diese zunächst ein, vorzugsweise vergleichsweise kurzer, erster Schneidbereich und an diesen ein erweiterter zweiter Bereich sowie an diesen wiederum ein, vorzugsweise vergleichsweise langer, dritter Schneidbereich anschließt. Der aufgeweitete Bereich ist beispielsweise rautenförmig, indem in die beiden gegenüberliegenden Schenkel in diese jeweils eine etwa V-förmige Einklinkung eingebracht ist. Da der Schneid-Klemm-Kontakt vorzugsweise ein Stanzteil ist, ist sowohl diese Geometrie als auch eine andere, den aufgeweiteten Bereich darstellende Geometrie beziehungsweise Kontur denkbar. Im aufgeweiteten Bereich müssen die einander zugewandten Kanten der Schenkel nicht unbedingt als Messerkanten ausgeführt sein.

Vorzugsweise gegenüberliegend zu diesem aufgeweiteten Bereich sind geeigneterweise an die Schneid-Klemm-Schenkel außenseitig lokale erhabene Konturen angeformt. Zweckmäßigerweise sind zudem außenseitig entlang der Schneid-Klemm-Schenkel weitere Fügekonturen (Zapfen und/oder Nuten) angeformt bzw. stanztechnisch eingebracht.

Der aufgeweitete Bereich des Schlitzes hat den vorteilhaften Zweck und die geeignete Funktion, den zunächst (ersten) im Schlitz angeschnittenen Draht aufzunehmen, sobald der weitere (zweite) Draht in dem sich an die Einführöffnung des Schlitzes anschließenden, vergleichsweise kurzen oder schmalen Schneidbereich zwischen den Messerkanten der einander gegenüber angeordneten Schenkel gelangt. Da sich in dieser Position der erste Draht in dem aufgeweiteten Bereich des Schlitzes befindet, wirken in dem zur Schlitzöffnung hin vorgelagerten Schneidbereich die erforderlichen Schneid-Klemm-Kräfte der beiden Schenkel auf den zweiten Draht. Auf diese Weise werden nacheinander beide Drähte angeschnitten und können anschließend über den erweiterten Bereich in den sich daran anschließenden Schneid-Klemm-Bereich, der insbesondere als Klemmbereich wirksam ist, klemmkontaktierend in Schlitzlängsrichtung weitergeführt beziehungsweise weitergepresst werden.

Gemäß einer weiteren vorteilhaften Ausgestaltung wirkt der Schneid-Klemm-Kontakt mit einer an dessen Außenkontur, insbesondere im Bereich dessen Schenkeln, angepassten Aufnahmetasche zusammen. Diese ist geeigneterweise ebenfalls geschlitzt, wobei einander gegenüberliegende taschenseitige Schlitze im Montagezustand des Schneid-Klemm-Kontaktes mit dessen Schlitz fluchten. Die außenseitig an den Schneid-Klemm-Kontakt angeformten Fügekonturen ermöglichen einen festen kraft- und/oder formschlüssigen Sitz des Schneid-Klemm-Kontaktes innerhalb der Füge- oder Aufnahmetasche, so dass vorzugsweise über die Schenkel eine zuverlässige und/oder zusätzliche Kraft auf den oder jeden kontaktierten Draht ausgeübt wird. In dieser Steck- oder Aufnahmetasche können in deren Schlitzbereichen die zu kontaktierenden Drähte bereits eingelegt sein, wenn der Schneid-Klemm-Kontakt in diese Fügetasche des zusätzlichen Teils eingepresst wird. Alternativ kann auch der mit den beiden Drähten bereits schneid-klemm-kontaktierte Kontakt anschließend in die Tasche eingesteckt werden.

Vorteilhafterweise ist die oder jede Fügetasche Bestandteil des (ringförmigen) Rahmenteils der Schalteinheit zur schaltungstechnisch vorgegebenen Kontaktierung der Kontaktdrähte, Spulenende und/oder Phasenanschlüsse für die Statorbeziehungsweise Motorwicklung des Elektromotors, insbesondere eines Kühlerlüftermotors eines Kraftfahrzeugs.

Zur Kontaktierung von phasenseitigen Anschlüssen sind beispielsweise drei derartige Schneid-Klemm-Kontakte mit diesen zugeordneten Füge- oder Stecktaschen im Rahmenteil der Schalteinheit (Verschaltungs- oder Terminationsring) vorgesehen und beispielsweise zueinander äquidistant angeordnet. Das vorzugsweise kreisringförmige Rahmenteil nimmt zudem geeigneterweise zur Verschaltung der Spulen der Statorwicklung vorgesehene Kontaktdrähte auf, die mit den jeweiligen Spulenenden und/oder Phasenanschlüssen kontaktiert werden.

Nachfolgend werden Ausführungsbeispiele der Erfindung anhand einer Zeichnung näher erläutert. Darin zeigen:
- Fig. 1a und 1b: einen Schneid-Klemm-Kontakt mit einem von zwei Schneid-Klemm-Schenkeln flankierten Schneid-Klemm-Schlitz ohne bzw. mit schenkelaußenseitig einer Schlitzöffnung angeordneter Fügekontur,
- Fig. 2: einen der Schneid-Klemm-Schenkel eines Schneid-Klemm-Kontakts mit einer eine Soll-Biegestelle herstellenden, kreisförmigen Ausnehmung im Schenkel-Übergangsbereich,
- Fig. 3: in perspektivischer Darstellung einen Verschaltungsring mit mehreren in Kreisform angeordneten Kontaktdrähten und drei äquidistant angeordneten Schneid-Klemm-Kontakten,
- Fig. 4: in einer Darstellung gemäß Figur 3 eine Schalteinheit mit einem derartigen Verschaltungsring und mit einem ringförmigen Rahmenteil,
- Fig. 5: die Schalteinheit gemäß Figur 4 ohne Verschaltungsring und mit Blick auf eine Stecktasche ohne eingesetzten Schneid-Klemm-Kontakt,
- Fig. 6: in einer Darstellung gemäß Fig. 5 eine Ausführungsform der Schalteinheit mit geschlossenen Spulenkassetten
- Fig. 7: in perspektivischer Darstellung einen Stator mit aufgesetzter Schalteinheit,
- Fig. 8: in perspektivischer Darstellung den Stator mit aufgesetzter Schalteinheit und den Rotor sowie die mit den Schneid-Klemm-Kontakten verbundene Elektronik (Leiterplatte) eines Elektromotors, und
- Fig. 9: in perspektivischer Darstellung den Elektromotor als Kühlerlüftermotor für ein Kraftfahrzeugs inklusive Schalteinheit und Elektronik.

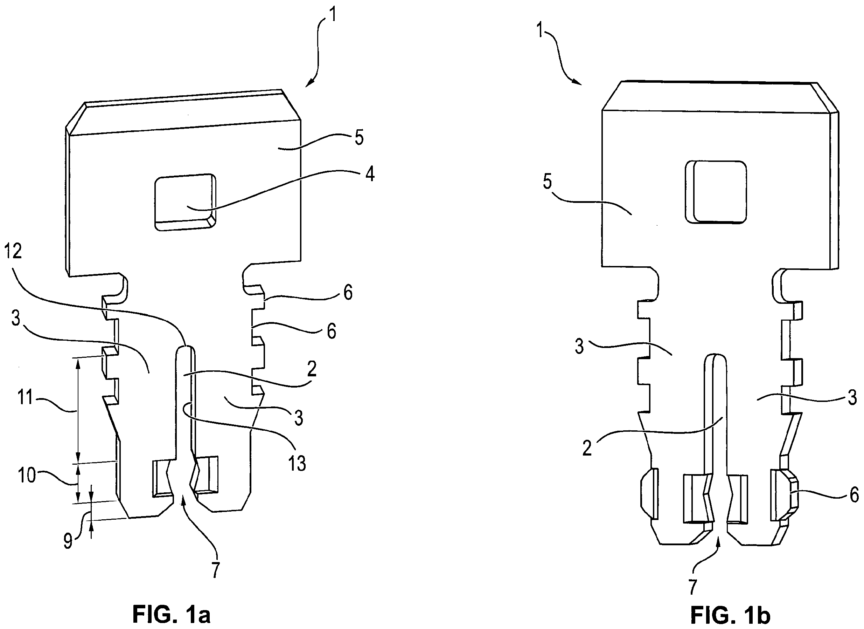

Die Figuren 1a und 1b zeigen einen nachfolgend auch einfach als Kontakt bezeichneten Schneid-Klemm-Kontakt 1 mit einem nachfolgend einfach als Schlitz 2 bezeichneten Schneid-Klemm-Schlitz, der von zwei nachfolgend einfach als Schenkel 3 des bezeichneten Schneid-Klemm-Schenkeln des Schneid-Klemm-Kontaktes 1 flankiert ist, sich also zwischen diesen beiden Schenkeln 3 befindet bzw. gebildet ist. Der Kontakt 1 ist vorzugsweis ein Stanzteil. Die Schenkel 3 des Kontaktes 1 gehen in einen vorzugsweise mit einer Durchgangsöffnung (Durchgangsbohrung) 4 versehenen Kontaktkopf 5 über. Außenseitig der Schenkel 3 sind an diese Fügekonturen 6 (Nuten, Zapfen) angeformt beziehungsweise eingestanzt.

Der Schlitz 2 weist im Bereich der Schenkelfreienden der Schenkel 3 eine Schlitzöffnung 7 auf. An diesen schließt sich in Schlitzlängsrichtung 8 eine erste, vergleichsweise kurze Schneid-Klemm-Kontur 9 an. Diese geht in Schlitzlängsrichtung 8 in einen erweiterten Bereich 10 über. Dieser ist vorzugsweise rautenförmig. An diesen Bereich 10 wiederum schließt sich ein weiterer, vergleichsweise langer Schneid-Klemm-Bereich zumindest aber ein Klemmbereich 11 an. Dieser endet an den den Schenkelfreienden gegenüberliegenden Enden, d. h. am Übergangsbereich 12 der Schenkel 3.

Aufgrund dieser Kontaktgeometrien ist eine zuverlässige Kontaktierung beziehungsweise Verbindung nicht nur eines Drahtes, sondern zweier oder mehrere Drähte ermöglicht. Diese werden aufeinanderfolgend in Schlitzlängsrichtung 8 in den Schlitz 2 eingeführt beziehungsweise eingepresst und dabei umfangsseitig (azimutal) angeschnitten. Die Schnitttiefe ist dabei größer oder gleich der Dicke einer Isolierung (isolierenden Ummantelung) des oder jedes Drahtes. Hierzu sind die einander zugewandten Schenkelkanten der Schenkel 3 im Bereich des Schlitzes 2 messerartig als Messerkanten 13 ausgeführt. Die Durchmesserreduzierung des ersten im Schlitz 2 angeschnittenen Drahtes beträgt beispielsweise etwa 22%, während die Durchmesserreduzierung des weiteren im Schlitz 2 angeschnittenen Drahtes beispielsweise etwa 16% beträgt, bezogen auf einen Kupferdraht mit einem Durchmesser von beispielsweise 1,12 mm und einer Drahtisolierung von beispielsweise 0,003 mm, also einem Gesamtdrahtdurchmesser von ca. 1,15 mm bis 1,16 mm.

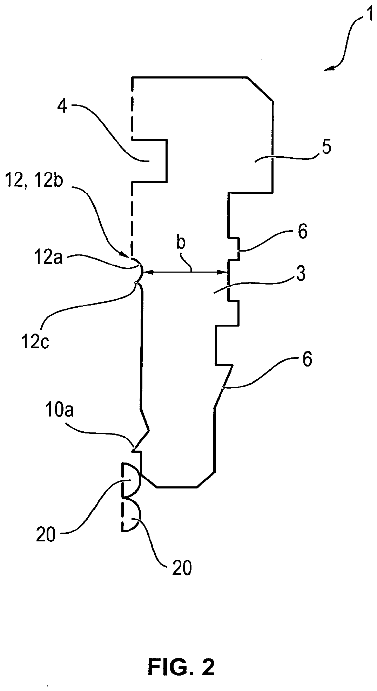

Bei der in Fig. 2 dargestellten Ausführungsform des Schneid-Klemm-Kontaktes 1, von dem lediglich der linke Schneid-Klemm-Schenkel 3 dargestellt ist, weist der rautenförmige Bereich 10 auf der der Schlitzöffnung 7 zugewandten Seite eine spitz zulaufende, vergleichsweise ausgeprägte Schneidkontur 10a auf. Im oder am Übergangsbereich 12 der Schenkel 3 ist eine im Ausführungsbeispiel kreisrunde Ausnehmungskontur 12a vorgesehen. Diese führt zu einer zumindest geringfügigen Verringerung der Schenkelbreite b der Schenkel 3 im Vergleich zur Schenkelbreite der Schneid-Klemmkontakte 1 gemäß den Figuren 1a und 1b ohne derartige Ausnehmungskontur im Übergangsbereich 12.

Diese Ausnehmungskontur 12a definiert eine Soll-Biegestelle 12b für die Schenkel 3, wenn diese bei Einführen der mit 20 bezeichneten Drähte oder Drahtenden in den Schneid-Klemmschlitz 2 des Kontaktes 1 nach außen ausbiegen. Die Ausnehmungskontur 12a bildet zudem eine den Schneid-Klemm-Schlitz 2 verengende Anlagekante 12c, beispielsweise in Form eines sektorförmigen Überstandes, als schlitzinterner Anschlag für die Drahtenden 20.

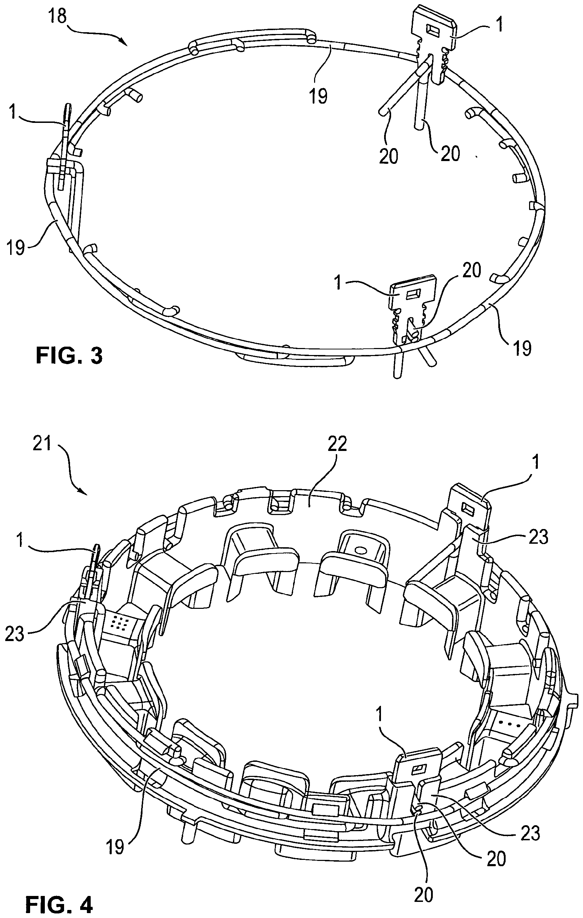

Figur 3 zeigt einen Verschaltungsring 18 mit mehreren in Kreisform angeordneten Kontaktdrähten 19 und drei äquidistant angeordneten Schneid-Klemm-Kontakten 1, die jeweils zwei Drähte beziehungsweise Drahtenden 20 schneid-klemm-kontaktieren.

Figur 4 zeigt eine Schalteinheit 21 mit einem derartigen Verschaltungsring 18. Die Schalteinheit 21 weist einen ringförmigen Rahmenkörper (Rahmenteil) 22, vorzugsweise aus Kunststoff, auf. Dieser wiederum weist im Bereich des jeweiligen Schneid-Klemm-Kontaktes 1 eine Aufnahmetasche (Steck-/Fügetasche) 23 zur Aufnahme des Schneid-Klemm-Kontaktes 1 auf.

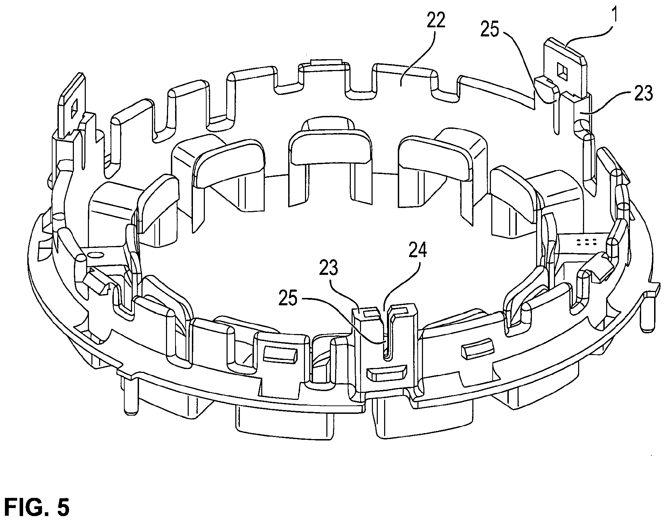

Figur 5 zeigt die Schalteinheit 21 beziehungsweise das Rahmenteil 22 gemäß Figur 4 mit zwei in die zugeordnete Stecktaschen 23 eingesetzten Schneid-Klemm-Kontakten 1, während die im Figurenvordergrund erkennbare Stecktasche 23 ohne Schneid-Klemm-Kontakt 1 erkennbar ist. Die in diese Stecktaschen 23 eingebrachten, endseitig wiederum mit einer Schlitzöffnung 24 versehenen Schlitze 25 fluchten mit dem Schlitz 2 des jeweiligen Schneid-Klemm-Kontaktes 1. Dabei befindet sich die jeweilige rahmenseitige Schlitzöffnung 24 auf der der Schlitzöffnung 7 des Schneid-Klemm-Kontaktes 1gegenüberliegenden Schlitzseite, also auf der Einführ- oder Einsteckseite der jeweiligen Stecktasche 23.

Wie in den Figuren 3 und 4 erkennbar ist, verlaufen die kontaktierten Drahtenden 20 normal zur vom Schlitz 2 aufgespannten Schlitzebene.

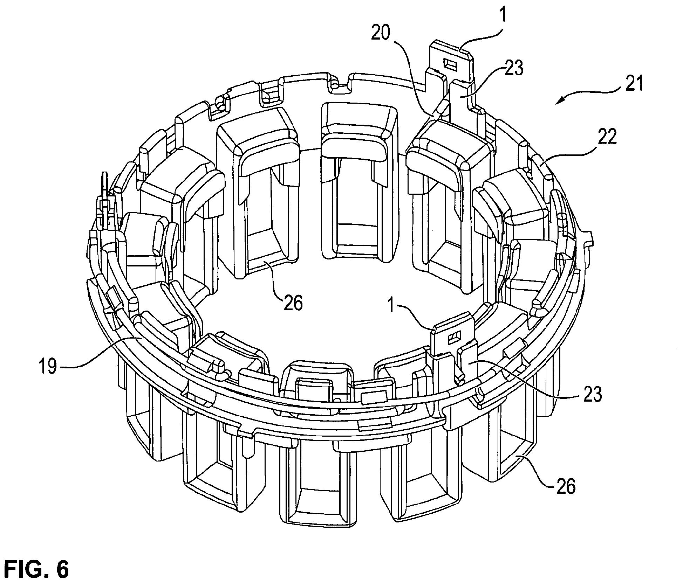

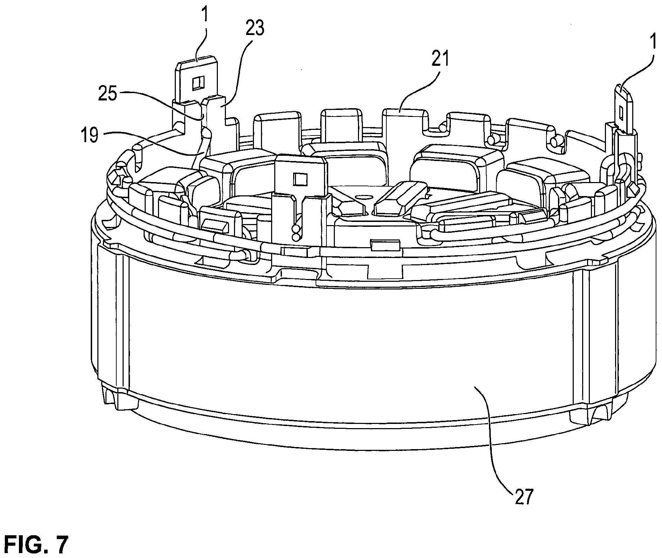

Figur 6 zeigt eine weitere Ausführungsform der Schalteinheit mit vollständigen, geschlossenen Spulenkassetten 26, die an das Rahmenteil 22 der Schalteinheit 21 angeformt sind. Diese nehmen im Montagezustand des in Figur 7 gezeigten Stators 27 eines Elektromotors 28 jeweils dessen Statorzähne auf und sind beziehungsweise werden in nicht näher dargestellter Art und Weise mit den einzelnen Spulen der Statorwicklung umwickelt.

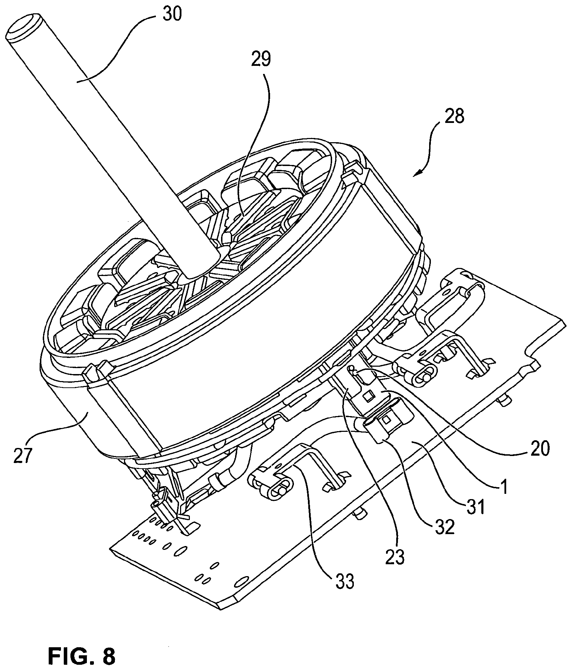

Figur 8 zeigt den mit der Schalteinheit 21 versehenen Stator 27 gemäß Figur 7 inklusive Rotor 29 und Motorachse 30 sowie inklusive Elektronik (Leiterplatte) 31 sowie deren Kontaktierung mit den Schneid-Klemm-Kontakten 1 über deren Kontaktköpfe 5. Diese sind in beispielsweise crimplaschenartige Stecktaschen 32 von beispielsweise als Stanz-Biegeteile aus Flachdraht hergestellten Kontakten (Flachkontakten) oder Kontaktabschnitten 33 eingesteckt und bilden hierbei die Phasenanschlüsse zur dreiphasigen Bestromung der Stator- bzw. Motorwicklung.

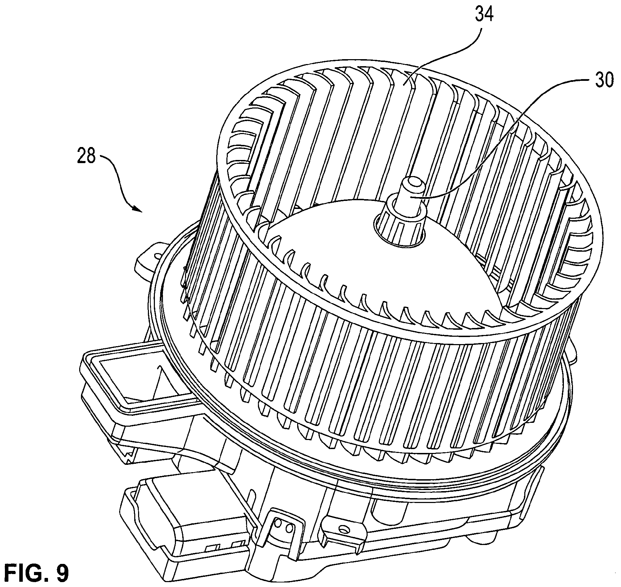

Figur 9 zeigt den montierten beziehungsweise zusammengesetzten Elektromotor 28 als Kühlerlüftermotor für ein Kraftfahrzeugs inklusive Stator 27, Schalteinheit 21 und Lüfterrad 34.

### Bezugszeichenliste

- 1: Schneid-Klemm-Kontakt
- 2: Schneid-Klemm-Schlitz
- 3: Schneid-Klemm-Schenkel
- 4: Durchgangsöffnung/-bohrung
- 5: Kontaktkopf
- 6: Fügekontur
- 7: Schlitzöffnung
- 8: Schlitzlängsrichtung
- 9: Schneid-Klemm-Kontur
- 10: Bereich
- 11: Schneid-Klemm-Bereich
- 12: Übergangsbereich
- 12a: Ausnehmungskontur
- 12b: Soll-Biegestelle
- 12c: Anlagekante/Anschlag
- 13: Messerkante

- 18: Verschaltungsring
- 19: Kontaktdraht
- 20: Draht/Drahtende
- 21: Schalteinheit
- 22: Rahmenteil/-körper
- 23: Aufnahme-/Steck-/Fügetasche
- 24: Schlitzöffnung
- 25: Schlitz
- 26: Spulenkassette
- 27: Stator
- 28: Elektromotor
- 29: Rotor
- 30: Motorachse
- 31: Elektronik/Leiterplatte
- 32: Stecktasche
- 33: Kontakt/-abschnitt
- 34: Lüfterrad

## Patentansprüche

1. Elektromotor (28) mit einer eine Anzahl von Phasenanschlüssen aufweisenden Schalteinheit (21) mit einer Anzahl von Kontaktdrähten (19) und mit einem ringförmigen Rahmenteil (22),
- wobei die Kontaktdrähte (19) zu einem Verschaltungsring (18) für die Spulenenden einer Statorwicklung angeordnet sind, und
- wobei das Rahmenteil (22) der Schalteinheit (21) eine der Anzahl der Schneid-Klemm-Kontakte (1) entsprechende Anzahl von Stecktaschen (23) zur Aufnahme der Schneid-Klemm-Kontakte (1) aufweist, deren jeder zwei unter Bildung eines Schneid-Klemm-Schlitzes (2) zueinander beabstandete Schneid-Klemm-Schenkel (3) aufweist,
**dadurch gekennzeichnet,**
- **dass** die Phasenanschlüsse von einer entsprechenden Anzahl von Schneid-Klemm-Kontakten (1) gebildet sind oder diese umfassen,
- **dass** mindestens zwei Drahtenden (20) der Kontaktdrähte (19) mit den Schneid-Klemm-Kontakten (1) verbunden sind,
- **dass** der Schneid-Klemm-Schlitz (2) des oder jedes Schneid-Klemm-Kontaktes (1) in Schlitzlängsrichtung (8) eine sich an eine schenkelfreiendseitige Schlitzöffnung (7) anschließende erste, vergleichsweise kurze Schneid-Klemm-Kontur (9) aufweist, die in Schlitzlängsrichtung (8) in einen rautenförmig aufgeweiteten Schlitzbereich (10) übergeht, an den sich ein weiterer, vergleichsweise langer Klemmbereich (11) anschließt, wobei der aufgeweiteten Schlitzbereich (10) auf der der Schlitzöffnung (7) zugewandten Seite eine spitz zulaufende, vergleichsweise ausgeprägte Schneidkontur (10a) aufweist, und
- **dass** der aufgeweitete Schlitzbereich (10) dazu vorgesehen und eingerichtet ist, das zunächst im Schneid-Klemm-Schlitz (2) angeschnittene erste Drahtende (20) aufzunehmen, sobald das zweite Drahtende (20) in den sich an die Schlitzöffnung (7) anschließenden ersten Schlitzbereich zwischen die Messerkanten der Schneid-Klemm-Kontur (9) der einander gegenüber angeordneten Schneid-Klemm-Schenkel (3) gelangt.

2. Elektromotor (28) nach Anspruch 1,
**dadurch gekennzeichnet,**
**dass** die jeweilige Stecktasche (23) des Rahmenteils (22) einen mit dem Schneid-Klemm-Schlitz (2) des in diese Stecktasche (23) gesteckten Schneid-Klemm-Kontaktes (1) fluchtenden Schlitz (25) aufweist.

3. Elektromotor (28) nach Anspruch 1 oder 2,
**dadurch gekennzeichnet,**
**dass** der Schneid-Klemm-Schlitz (2) und/oder die Schneid-Klemm-Schenkel (3) des oder jedes Schneid-Klemm-Kontaktes (1) derart ausgebildet ist bzw. sind, dass die mindestens zwei in Schlitzlängsrichtung (8) hintereinander in den Schneid-Klemm-Schlitz (2) eingeführten und dort an mindestens einer schenkelseitigen Messerkante (13) entlanggeführten Drahtenden (20) sicher klemmkontaktiert sind.

4. Elektromotor (28) nach einem der Ansprüche 1 bis 3,
**dadurch gekennzeichnet,**
**dass** der zweite Schlitzbereich (10) des Schneid-Klemm-Schlitzes (2) des oder jedes Schneid-Klemm-Kontaktes (1) rauten- oder rhombusförmig ist.

5. Elektromotor (28) nach einem der Ansprüche 1 bis 4,
**dadurch gekennzeichnet,**
**dass** der Schneid-Klemm-Schlitz (2) des oder jedes Schneid-Klemm-Kontaktes (1) in einem in Schlitzlängsrichtung (8) einer schenkelfreiendseitigen Schlitzöffnung (7) abgewandten Schlitzendbereich (11) eine Ausnehmungskontur (12a) aufweist, die eine Sollbiegestelle für die Schneid-Klemm-Schenkel (3) bildet.

6. Elektromotor (28) nach Anspruch 5,
**dadurch gekennzeichnet,**
**dass** die als Sollbiegestelle dienende Ausnehmungskontur (12a) kreisförmig ist.

7. Elektromotor (28) nach Anspruch 5 oder 6,
**dadurch gekennzeichnet,**
**dass** die als Sollbiegestelle dienende Ausnehmungskontur (12a) eine den Schneid-Klemm-Schlitz (2) verengende Anlagekontur (12c) als Anschlag für das oder jedes Drahtende (20) ausbildet.

8. Elektromotor (28) nach einem der Ansprüche 1 bis 7,
**dadurch gekennzeichnet,**
**dass** der oder jeder Schenkel (3) des jeweiligen Schneid-Klemm-Kontaktes (1) schenkelaußenseitig mindestens eine erhabene Fügekontur (6) aufweist.

## Claims

1. Electric motor (28), comprising a switching unit (21) having a number of phase connections and with a number of contact wires (19) and with an annular frame part (22),
- wherein the contact wires (19) are arranged to form an interconnection ring (18) for the coil ends of a stator winding, and
- wherein the frame part (22) of the switching unit (21) has a number of insertion pockets (23), which corresponds to the number of insulation-displacement contacts (1), for receiving the insulation-displacement contacts (1), each of which has two insulation-displacement limbs (3), which are spaced apart from one another so as to form an insulation-displacement slot (2),
**characterized**
- **in that** the phase connections are formed by a corresponding number of insulation-displacement contacts (1) or comprise said insulation-displacement contacts,
- **in that** at least two wire ends (20) of the contact wires (19) are connected to the insulation-displacement contacts (1),
- **in that** the insulation-displacement slot (2) of the or each insulation-displacement contact (1) has, in the slot longitudinal direction (8), a first, comparatively short insulation-displacement contour (9) which adjoins a limb free end-side slot opening (7) and merges with a slot region (10) which is widened in a diamond-shaped manner in the slot longitudinal direction (8) and is adjoined by a further, comparatively long clamping region (11), wherein the widened slot region (10) has a tapering, comparatively pronounced cutting contour (10a) on the side facing the slot opening (7), and
- **in that** the widened slot region (10) is provided and designed to receive the first wire end (20) initially cut in the insulation-displacement slot (2) as soon as the second wire end (20) enters the first slot region, which adjoins the slot opening (7), between the blade edges of the insulation-displacement contour (9) of the insulation-displacement limbs (3) which are arranged opposite one another.

2. Electric motor (28) according to Claim 1,
**characterized**
**in that** the respective insertion pocket (23) of the frame part (22) has a slot (25) which is in alignment with the insulation-displacement slot (2) of the insulation-displacement contact (1) which is inserted into said insertion pocket (23).

3. Electric motor (28) according to Claim 1 or 2,
**characterized**
**in that** the insulation-displacement slot (2) and/or the insulation-displacement limbs (3) of the or each insulation-displacement contact (1) are/is designed in such a way that the at least two wire ends (20), which are introduced into the insulation-displacement slot (2) one behind the other in the slot longitudinal direction (8) and which are guided along at least one limb-side blade edge (13) there, are in reliable clamping contact.

4. Electric motor (28) according to one of Claims 1 to 3,
**characterized**
**in that** second slot region (10) of the insulation-displacement slot (2) of the or each insulation-displacement contact (1) is in the shape of a diamond or rhombus.

5. Electric motor (28) according to one of Claims 1 to 4,
**characterized**
**in that** the insulation-displacement slot (2) of the or each insulation-displacement contact (1) has a recess contour (12a), which forms a predetermined bending point for the insulation-displacement limb (3), in a slot end region (11) which is averted from a limb free end-side slot opening (7) in the slot longitudinal direction (8).

6. Electric motor (28) according to Claim 5,
**characterized**
**in that** the recess contour (12a), which serves as a predetermined bending point, is circular.

7. Electric motor (28) according to either of Claims 5 and 6,
**characterized**
**in that** the recess contour (12a), which serves as a predetermined bending point, forms an abutment contour (12c), which narrows the insulation-displacement slot (2), as a stop for the or each wire end (20).

8. Electric motor (28) according to one of Claims 1 to 7,
**characterized**
**in that** the or each limb (3) of the respective insulation-displacement contact (1) has, on the outside of the limb, at least one raised joining contour (6).

## Revendications

1. Moteur électrique (28), comprenant une unité de commutation (21) présentant un certain nombre de connexions de phase, pourvue d'un certain nombre de fils de contact (19) et d'une partie de cadre annulaire (22),
- dans lequel les fils de contact (19) sont agencés en anneau d'interconnexion (18) pour les extrémités de bobine d'un enroulement de stator, et
- dans lequel la partie de cadre (22) de l'unité de commutation (21) présente un nombre de poches d'enfichage (23) correspondant au nombre des contacts autodénudants (1) pour recevoir les contacts autodénudants (1) dont chacun présente deux branches autodénudantes (3) espacées l'une par rapport à l'autre en formant une fente autodénudante (2),
**caractérisé en ce que**
- les connexions de phase sont formées par ou comprennent un nombre correspondant de contacts autodénudants (1),
- au moins deux extrémités de fil (20) des fils de contact (19) sont reliées aux contacts autodénudants (1),
- la fente autodénudante (2) du ou de chaque contact autodénudant (1) présente dans la direction longitudinale de fente (8) un premier contour autodénudant (9), relativement court, adjacent à une ouverture de fente (7) côté extrémité sans branche, qui passe dans la direction longitudinale de fente (8) à une zone de fente (10) évasée en forme de losange qui est suivie d'une zone de serrage (11) supplémentaire, relativement longue, dans lequel la zone de fente évasée (10) présente sur le côté tourné vers l'ouverture de fente (7) un contour coupant (10a), relativement prononcé, qui s'amincit, et
- la zone de fente évasée (10) est prévue et conçue pour recevoir la première extrémité de fil (20) d'abord entamée dans la fente autodénudante (2) dès que la deuxième extrémité de fil (20) entre dans la première zone de fente adjacente à l'ouverture de fente (7) entre les arêtes de couteau du contour autodénudant (9) des branches autodénudantes (3) disposées l'une face à l'autre.

2. Moteur électrique (28) selon la revendication 1, **caractérisé en ce que** la poche d'enfichage (23) respective de la partie de cadre (22) présente une fente (25) en affleurement avec la fente autodénudante (2) du contact autodénudant (1) enfiché dans cette poche d'enfichage (23).

3. Moteur électrique (28) selon la revendication 1 ou 2, **caractérisé en ce que** la fente autodénudante (2) et/ou la branche autodénudante (3) du ou de chaque contact autodénudant (1) est/sont réalisée(s) de telle sorte que les au moins deux extrémités de fil (20) introduites dans la fente autodénudante (2) l'une après l'autre dans la direction longitudinale de fente (8) et guidées dans celle-ci le long d'au moins une arête de couteau (13) côté branche est/sont mise(s) en contact par serrage de façon sûre.

4. Moteur électrique (28) selon l'une quelconque des revendications 1 à 3, **caractérisé en ce que** la deuxième zone de fente (10) de la fente autodénudante (2) du ou de chaque contact autodénudant (1) présente une forme de losange ou rhombique.

5. Moteur électrique (28) selon l'une quelconque des revendications 1 à 4, **caractérisé en ce que** la fente autodénudante (2) du ou de chaque contact autodénudant (1) présente dans une zone d'extrémité de fente (11) détournée d'une ouverture de fente (7) dans la direction longitudinale de fente (8) un contour d'évidement (12a) qui constitue un point destiné au pliage pour les branches autodénudantes (3).

6. Moteur électrique (28) selon la revendication 5, **caractérisé en ce que** le contour d'évidement (12a) servant de point destiné au pliage est circulaire.

7. Moteur électrique (28) selon la revendication 5 ou 6, **caractérisé en ce que** le contour d'évidement (12a) servant de point destiné au pliage réalise un contour d'appui (12c) rétrécissant la fente autodénudante (2) comme butée pour la ou chaque extrémité de fil (20).

8. Moteur électrique (28) selon l'une quelconque des revendications 1 à 7, **caractérisé en ce que** la ou chaque branche (3) du contact autodénudant respectif (1) présente au moins un contour d'assemblage (6) en relief du côté extérieur de la branche.
